# EUROPEAN PATENT APPLICATION

(11) **EP 2 642 366 A1**
(43) Date of publication of application: **25.09.2013**
(21) Application number: 13154426.4
(22) Date of filing: 07.02.2013
(51) Int. Cl.: G06F 1/16, H04L 12/12

(54) **Portable access and power supply apparatus**

(30) Priority: 21.03.2012 TW 101205051
(71) Applicant: Gigastone Corporation, Taipei Taiwan (CN)
(72) Inventor: Wong, John, Taipei (CN)
(74) Representative: Dennemeyer & Associates S.A.

(57) **Abstract**

A portable access and power supply apparatus includes a main body having at least one personal server device, a power supply unit and a communication interface device. The personal server device and the power supply unit are electrically connected to the communication interface device. Via the communication interface device, the data in the personal server device can be accessed and transmitted to an external device and the data of the external device can be received by the personal server device. Via a local area network or a wireless network, the data of the portable access and power supply apparatus can be readily accessed. Also, the portable access and power supply apparatus is able to supply power for other electronic products.

## Description

### BACKGROUND OF THE INVENTION

### 1. Field of the Invention

The present invention relates generally to a portable access and power supply apparatus, and more particularly to a portable access and power supply apparatus, which is convenient to carry. Via a local area network or a wireless network, the data of the portable access and power supply apparatus can be readily accessed. Also, the portable access and power supply apparatus is able to supply power for other electronic products.

### 2. Description of the Related Art

There are various storage devices for a user to access data. The most often seen storage devices include portable power supply of cellular phone, NAND flash memory, solid-state drive, etc. The portable power supply has a personal wireless server and a large-capacity memory so that the volume of the portable power supply is considerably large. Therefore, it is inconvenient to carry the portable power supply.

In recent years, universal serial bus (USB) interface and flash memory have been more and more popularized. To go with this trend, a substitutive product-USB flash disk has been developed. The USB flash disk has the advantages of large capacity, better compatibility and convenient carriage. By means of the USB flash disk, the data can be conveniently transferred between different computers and storage devices.

In addition, a solid-state drive or a USB flash drive can be assembled with a hard disk enclosure to form a portable hard disk. Through a USB interface, the data of the portable hard disk are accessible. The data can be transferred through the USB interface in a wired manner.

In the case that a user needs to transfer and copy the data through wireless network, the user will have to carry a wireless network card, a portable storage device and a portable power supply with him/her. The portable storage device itself has no power supply unit and must be powered by the portable power supply for normal operation. This is quite inconvenient. Moreover, while having a larger storage capacity, the portable storage device has a heavier weight and larger volume and is unsuitable to carry.

### SUMMARY OF THE INVENTION

A primary object of the present invention is to provide a portable access and power supply apparatus, which can be conveniently carried. By means of the portable access and power supply apparatus, the data can be readily accessed via a local area network or a wireless network. Also, the portable access and power supply apparatus is able to supply power for other electronic products.

To achieve the above and other objects, the portable access and power supply apparatus of the present invention includes a main body having at least one personal server device, a power supply unit and a communication interface device. The personal server device and the power supply unit are electrically connected to the communication interface device. Via the communication interface device, the data in the personal server device can be accessed and transmitted to an external device and the data of the external device can be received by the personal server device.

The portable access and power supply apparatus is convenient to carry. In addition, via a local area network or a wireless network, the data of the portable access and power supply apparatus can be readily accessed. The portable access and power supply apparatus not only can supply power for itself, but also can supply power for other electronic products.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a block diagram of a first embodiment of the portable access and power supply apparatus of the present invention;
Fig. 2 is a block diagram of a second embodiment of the portable access and power supply apparatus of the present invention;
Fig. 3 is a block diagram of a third embodiment of the portable access and power supply apparatus of the present invention;
Fig. 4 is a block diagram of a fourth embodiment of the portable access and power supply apparatus of the present invention;
Fig. 5 is a block diagram showing the operation of the portable access and power supply apparatus of the present invention in one state;
Fig. 6 is a block diagram showing the operation of the portable access and power supply apparatus of the present invention in another state; and
Fig. 7 is a block diagram showing the operation of the portable access and power supply apparatus of the present invention in still another state.

### DETAILED DESCRIPTION OF THE PREFERRED EMBODIMENTS

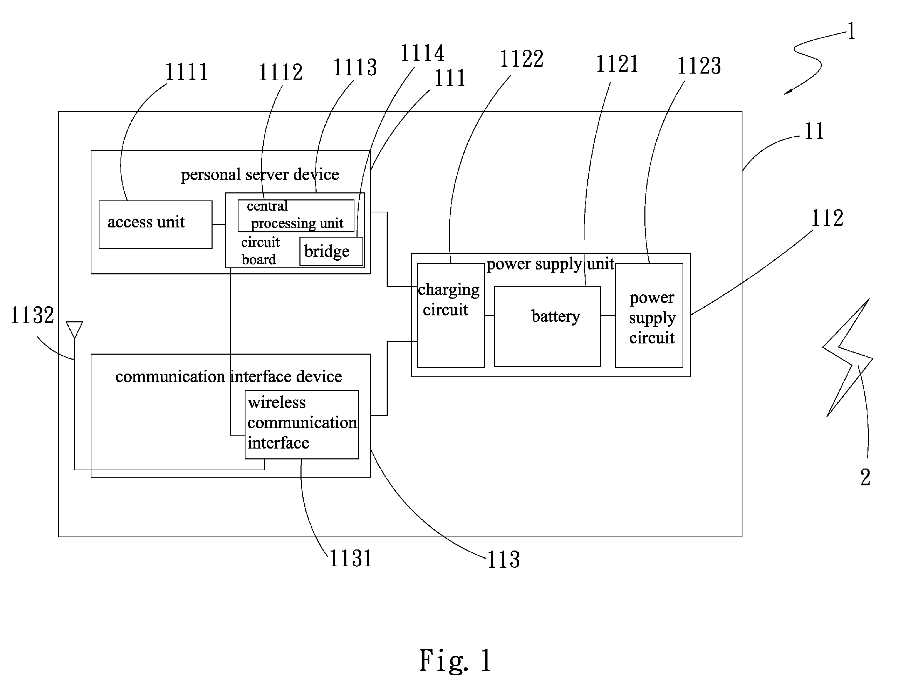

Please refer to Fig. 1, which is a block diagram of a first embodiment of the portable access and power supply apparatus of the present invention. According to the first embodiment, the portable access and power supply apparatus 1 includes a main body 11 having at least one personal server device 111, a power supply unit 112 and a communication interface device 113.

The power supply unit 112 includes a battery 1121, a charging circuit 1122 and a power supply circuit 1123. The battery 1121, the charging circuit 1122 and the power supply circuit 1123 are electrically connected to each other. The personal server device 111 and the communication interface device 113 are connected to the battery 1121 via the charging circuit 1122 and powered by the battery 1121.

The personal server device 111 and the power supply unit 112 are electrically connected to the communication interface device 113. The data in the personal server device 111 can be transmitted or received via the communication interface device 113, whereby a user can freely access the data in the personal server device 111.

The personal server device 111 further has an access unit 1111, a central processing unit 1112, a circuit board 1113 and a bridge 1114. The central processing unit 1112 and the bridge 1114 are disposed on the circuit board 1113. The access unit 1111 is electrically connected to the circuit board 1113 and the central processing unit 1112 is electrically connected to the bridge 1114.

The access unit 1111 is selected from a group consisting of an NAND flash memory and a solid-state drive. In this embodiment, the access unit 1111 is, but not limited to, an NAND flash memory for illustration purposes only. The NAND flash chip of the NAND flash memory can be expanded and replaced in accordance with a user's requirement so as to increase the storage capacity of the access unit 1111. The personal server device 111 is selected from a group consisting of a File Transfer Protocol (FTP) server and a HyperText Transfer Protocol (HTTP) server.

Via the communication interface device 113, the personal server device 111 receives and transmits a wireless network signal 2 for a user to access the data of the personal server device 111. Therefore, a user not only can store the data in the personal server device 111, but also can read the data in the personal server device 111. Also, the user can real-time watch and review the multimedia audio/video files in the personal server device 111.

The communication interface device 113 further has a wireless communication interface unit 1131 and an antenna 1132. The wireless communication interface unit 1131 is electrically connected to the personal server device 111 and serves to receive wireless network signal 2 via the antenna 1132.

The wireless communication interface unit 1131 can receive any of Bluetooth, HiperLAN, Triple Play, GSM/GPRS, 3G, 3.5G, 4G, IEEE802.11, IEEE802.3, 802.15, 802.11 and Wi-Fi Direct signals.

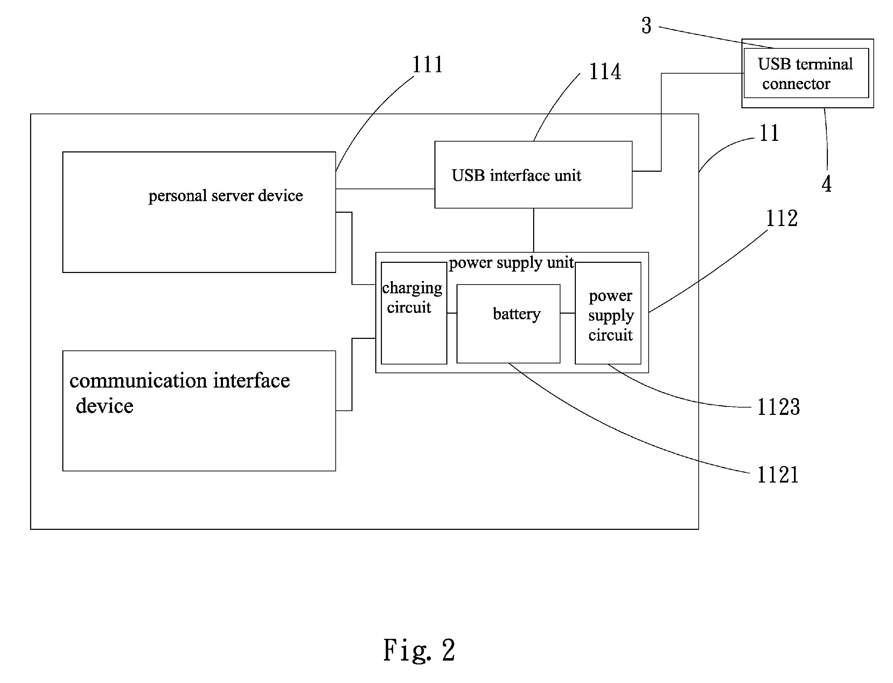

Please refer to Fig. 2, which is a block diagram of a second embodiment of the portable access and power supply apparatus of the present invention. The second embodiment is partially identical to the first embodiment in structure and thus will not be repeatedly described hereinafter. The second embodiment is different from the first embodiment in that the second embodiment further includes a USB interface unit 114 electrically connected to the power supply unit 112 and the personal server device 111. A user can electrically connect a USB terminal connector 3 to the power supply unit 112 and the personal server device 111 to access the data of the personal server device 111. In addition, in the case that another electronic device 4 needs to be supplemented with power or needs to be externally powered, through the power supply circuit 1123 of the power supply unit 112, the electronic device 4 can be powered by the battery 1121.

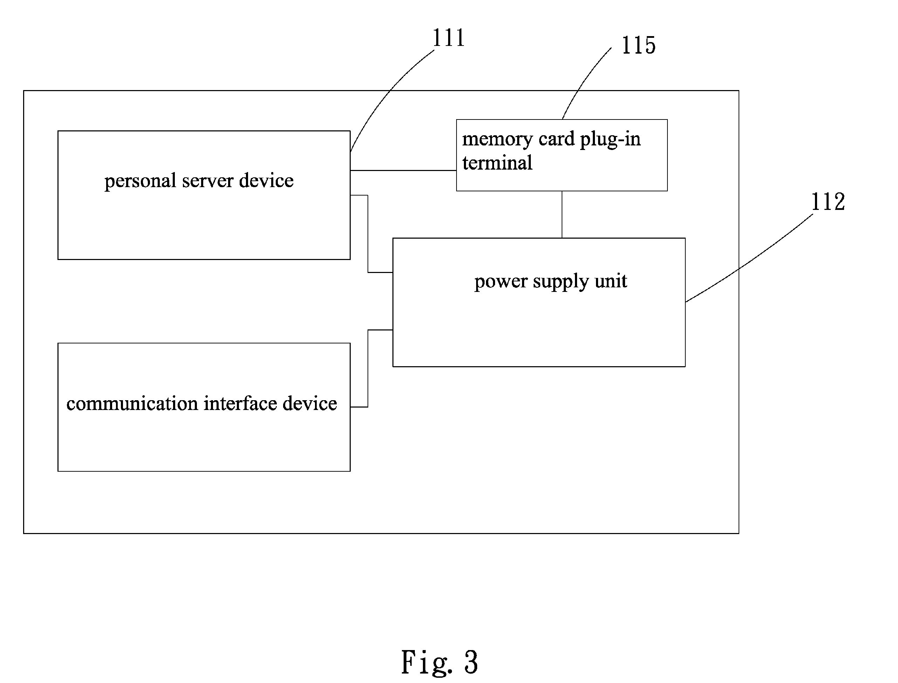

Please refer to Fig. 3, which is a block diagram of a third embodiment of the portable access and power supply apparatus of the present invention. The third embodiment is partially identical to the first embodiment in structure and thus will not be repeatedly described hereinafter. The third embodiment is different from the first embodiment in that the third embodiment further includes a memory card plug-in terminal 115 electrically connected to the power supply unit 112 and the personal server device 111. The memory card plug-in terminal 115 is in the form of a memory card selected from a group consisting of CompactFlash (CF) card, SmartMedia card (SMC), MultiMediaCard (MMC), Secure Digital (SD) card and Memory Stick (MS) card. Through the memory card plug-in terminal 115, a user can use any of the above memory cards to access and transfer the data between the memory card and the personal server device 111.

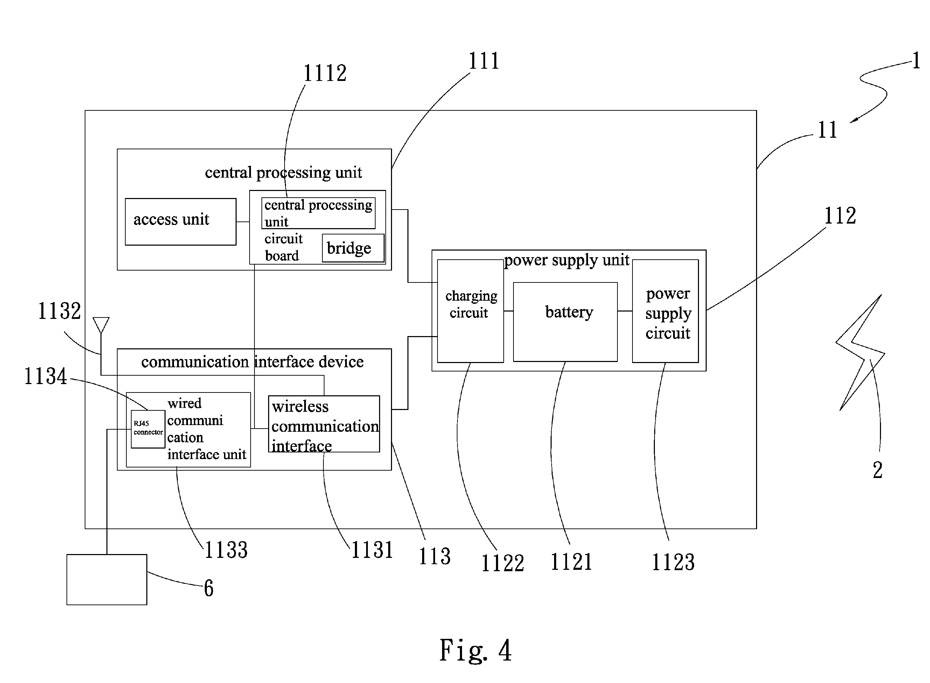

Please refer to Fig. 4, which is a block diagram of a fourth embodiment of the portable access and power supply apparatus of the present invention. The fourth embodiment is partially identical to the first embodiment in structure and thus will not be repeatedly described hereinafter. The fourth embodiment is different from the first embodiment in that in the fourth embodiment, the communication interface device 113 further includes a wired communication interface unit 1133 in addition to the wireless communication interface unit 1131 and the antenna 1132. The wireless communication interface unit 1131 and the wired communication interface unit 1133 are electrically connected to the central processing unit 1112 of the personal server device 111 and the antenna 1132. The wired communication interface unit 1133 has at least one RJ45 connector 1134. A user can selectively access the data of the personal server device 111 via the wireless communication interface unit 1131 or a network line 6 connected to the RJ45 connector 1134 of the wired communication interface unit 1133.

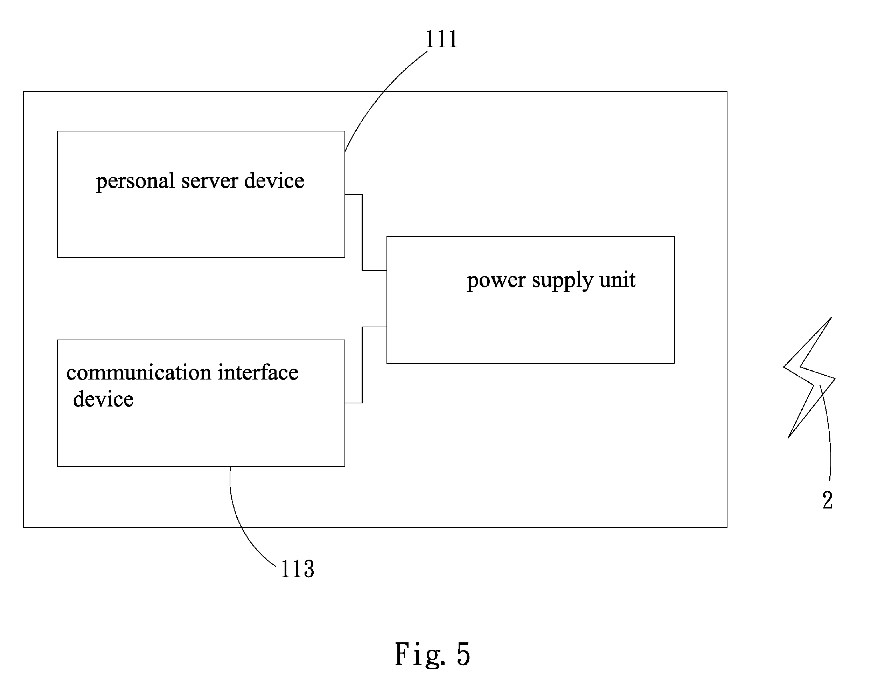

Please refer to Fig. 5, which is a block diagram showing the operation of the portable access and power supply apparatus of the present invention in one state. When a user uses the communication interface device 113, which is connected to the personal server device 111, to receive a wireless network signal 2, the user can freely upload or download the data of the personal server device 111 in the form of the wireless network signal 2. In this case, the present invention is used as a convenient network portable hard disk.

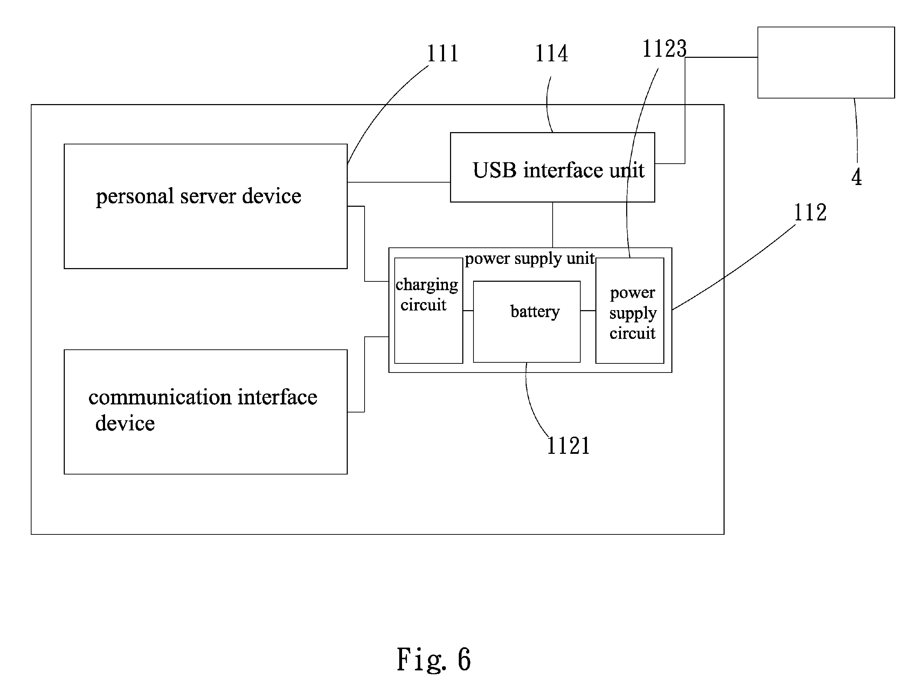

Please refer to Fig. 6, which is a block diagram showing the operation of the portable access and power supply apparatus of the present invention in another state. The USB interface unit 114 is connected to the power supply unit 112 and the personal server device 111. When a user connects an external electronic device 4 to the USB interface unit 114, the electronic device 4 can access the data of the personal server device 111. Moreover, through the USB interface unit 114, the electronic device 114 is connected to the power supply circuit 1123 of the power supply unit 112 and powered by the battery 1121 thereof.

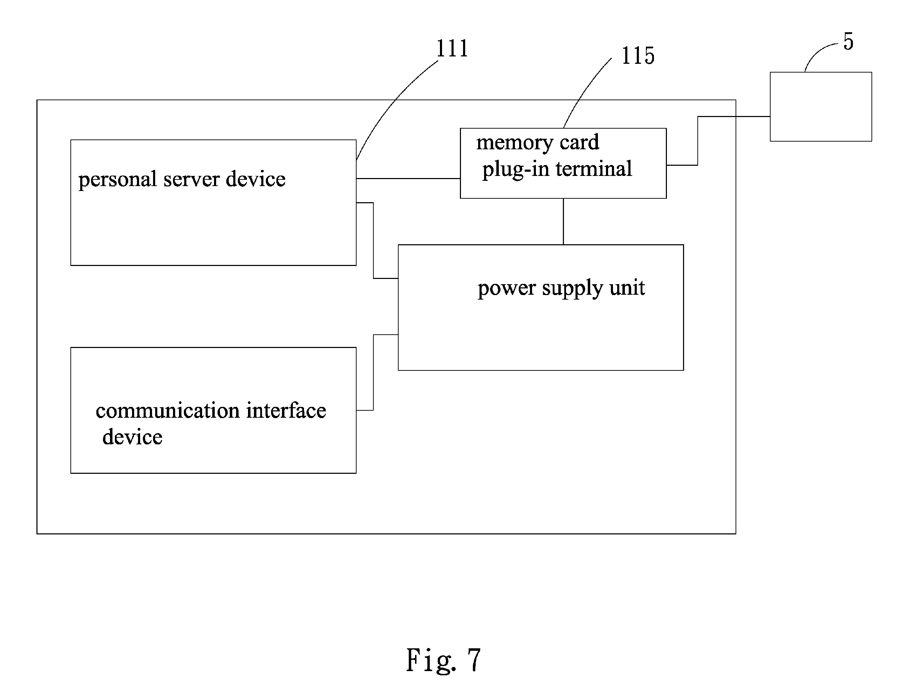

Please refer to Fig. 7, which is a block diagram showing the operation of the portable access and power supply apparatus of the present invention in still another state. A user can electrically connect a memory card 5 to the memory card plug-in terminal 115, whereby the memory card 5 is connected to the personal server device 111 via the memory card plug-in terminal 115. In this case, the data of the memory card 5 and the data of the personal server device 111 can be freely accessed and transferred between the memory card 5 and the personal server device 111.

The above embodiments are only used to illustrate the present invention, not intended to limit the scope thereof. It is understood that many changes and modifications of the above embodiments can be made without departing from the spirit of the present invention. The scope of the present invention is limited only by the appended claims.

## Claims

1. A portable access and power supply apparatus comprising a main body having at least one personal server device, a power supply unit and a communication interface device, the personal server device and the power supply unit being electrically connected to the communication interface device, whereby data in the personal server device can be transmitted or received via the communication interface device.

2. The portable access and power supply apparatus as claimed in claim 1, wherein the personal server device has an access unit, a central processing unit, a circuit board and a bridge, the central processing unit being disposed on the circuit board, the access unit being electrically connected to the circuit board and the central processing unit being electrically connected to the bridge, the access unit being selected from a group consisting of an NAND flash memory and a solid-state drive.

3. The portable access and power supply apparatus as claimed in claim 2, wherein the communication interface device has a wireless communication interface unit and an antenna, the wireless communication interface unit being electrically connected to the central processing unit of the personal server device and the antenna.

4. The portable access and power supply apparatus as claimed in claim 1, further comprising a USB interface unit electrically connected to the power supply unit and the personal server device.

5. The portable access and power supply apparatus as claimed in claim 1, further comprising a memory card plug-in terminal electrically connected to the power supply unit and the personal server device.

6. The portable access and power supply apparatus as claimed in claim 5, wherein the memory card plug-in terminal is in the form of a memory card selected from a group consisting of CompactFlash (CF) card, SmartMedia card (SMC), MultiMediaCard (MMC), Secure Digital (SD) card and Memory Stick (MS) card.

7. The portable access and power supply apparatus as claimed in claim 1, wherein the personal server device is a File Transfer Protocol (FTP) server.

8. The portable access and power supply apparatus as claimed in claim 1, wherein the personal server device is a HyperText Transfer Protocol (HTTP) server.

9. The portable access and power supply apparatus as claimed in claim 1, wherein the personal server device and the communication interface device are powered by the power supply unit.

10. The portable access and power supply apparatus as claimed in claim 1, wherein the power supply unit includes a battery, a charging circuit and a power supply circuit, the battery, the charging circuit and the power supply circuit being electrically connected to each other.

11. The portable access and power supply apparatus as claimed in claim 3, wherein the wireless communication interface unit is able to receive any of Bluetooth, HiperLAN, Triple Play, GSM/GPRS, 3G, 3.5G, 4G, IEEE802.11, IEEE802.3, 802.15, 802.11 and Wi-Fi Direct signals.

12. The portable access and power supply apparatus as claimed in claim 2, wherein the communication interface device includes a wireless communication interface unit, a wired communication interface unit and an antenna, the wireless communication interface unit and the wired communication interface unit being electrically connected to the central processing unit of the personal server device and the antenna, the wired communication interface unit having at least one RJ45 connector.
